# EUROPEAN PATENT SPECIFICATION

(11) **EP 2 953 205 B1**
(45) Date of publication and mention of the grant of the patent: **07.04.2021**
(21) Application number: 14171582.1
(22) Date of filing: 06.06.2014
(51) Int. Cl.: H01Q 1/12, F16B 2/10, F16B 2/12

(54) **A FIXING SYSTEM FOR FIXING A STRUCTURE ON ANOTHER STRUCTURE**
BEFESTIGUNGSSYSTEM ZUR BEFESTIGUNG EINER STRUKTUR AUF EINER ANDEREN STRUKTUR
SYSTÈME DE FIXATION D'UNE STRUCTURE SUR UNE AUTRE STRUCTURE

(43) Date of publication of application: 09.12.2015
(73) Proprietor: Alcatel- Lucent Shanghai Bell Co., Ltd, Pudong Xinqu Shanghai 201206 (CN)
(72) Inventor: TUAU, Denis, 44570 Trignac (FR); VANETTI, Loïc, 44570 Trignac (FR)
(74) Representative: Novagraaf Technologies

(56) References cited:
- EP-A1- 2 713 435
- US-A- 5 867 132
- US-A1- 2009 139 156
- US-A1- 2011 233 373
- US-A1- 2014 014 797
- US-B1- 6 222 504

## Description

### FIELD OF THE INVENTION

The present invention relates to a fixing system, for fixing a structure on another structure.

### BACKGROUND OF THE INVENTION

It is often needed to install equipments or devices on specific locations with limited accessibility. The required heights of said equipments or devices are limiting factors for accessibility. Geometrical arrangements of equipments or devices, or structures holding said equipments or devices are also other factors that contribute to the difficulty of the installation.

Usually multiple vendors of holding structures and fixations are involved for an installation of equipments or devices. Also said equipments or devices are not necessarily standardized and require then specific adapters for being attached to a holding structure. Large variety of fixing system renders complex then the task to deploy equipments or devices on their locations US 2011233373 discloses a fixing device for a holding pole. US 2014014797 discloses a universal clamping assembly. US 2009139156 discloses a beam clamp. US 6222504, EP 2713435 and US 5867132 disclose antenna fixing devices.

For example, radiofrequency antenna systems comprising transmitters and/or receivers usually need to be located on top of building or towers. Radiating elements of such antenna systems are often locked to pylons or mast installed on rooftops or comprised in cellular towers. There exist a large variety of radiofrequency systems as there are multiple vendors of such systems. Also each telecommunication operators owning a right to install an antenna on a building or owning a cellular tower may have their own hardware configuration or requirements in terms of installation. Such installation requires lengthy hand work because each configuration of outdoor/indoor equipments or devices can be a specific case.

Some solutions exist to fix a radiofrequency antenna system on a support structure. Such solutions usually involve lots of different parts, which are firmly maintained together with numerous bolts, nuts and washers, of different sizes. Installation is then difficult because disparate actions and tools are needed to assemble the fixing system. Moreover numerous parts such as bolts, nuts, washers etc are prone to the environment conditions that may harm the fixing or fastening system. For example each individual part may be aging differently, and outdoors conditions such as rain may increase risk of corrosion or seizures of elements of the said fastening system.

Other equipments or devices suffer from same problematic. Weather stations using outdoor anemometer or barometer to be located on specific heights are requiring robust fixing system to be held on top of mast for example. The fixing system of a lamp of a street lamp also has to undergo outside conditions reliably.

A reliable solution to fix or attach equipments or device is then needed. Said solution is to be adaptable to varying geometry of the support structure, needs to be simple for technicians and have to be robust to any kind of environment.

### SUMMARY OF THE INVENTION

The invention aims to remedy all or some of the disadvantages of the above identified prior art. It particularly proposes ways to fix a structure on a support structure thanks to a fixing system.

A first aspect of the invention relates then to a fixing system, as defined in claim 1.

Thus, the fixing system enables the first structure to be held by the support structure. The fixing system advantageously comprises a small number of parts that eases the installation and increases the robustness of said fixing system. The fixing system converts the movement of the locket push towards the clamp into the translation movements of said clamp, for clamping said fixing system on the support structure. The mechanical efforts of the clamping of the fixing system are distributed on the locket push, the clamp and the clamp support which advantageously makes the fixing system robust. The fixing system is usable on different support structures varying in shape or circumferences.

According to various embodiments, such fixing system comprises one or more of the features, as defined in dependent claims.

### BRIEF DESCRIPTION OF THE FIGURES

Some embodiments of the present invention are now described, by way of example only, and with reference to the accompanying drawings, in which:
- FIG. 1 is a schematic view of a first example of a fixing system according to the invention,
- FIG. 2 is a schematic view of second example of a fixing system according to the invention,
- FIG. 3a is a schematic view of a third example of a fixing system according to the invention,
- FIG. 3b is a schematic view of a locket push from a third example of a fixing system according to the invention,
- FIG. 3c is another schematic view of a third example of a fixing system according to the invention,
- FIG. 4a is a schematic view of a first clamp according to the invention,
- FIG. 4b is a schematic view of a first clamp, a second clamp and a locket push according to the invention,
- FIG. 4c is a schematic view of a first clamp and a second clamp and a support structure according to the invention,
- FIG. 5 is a schematic view of sliding profiles according to the invention,
- FIG. 6 is a schematic view of a fourth example of a fixing system and support structures profiles according to the invention,
- FIG. 7 is a schematic view of a first clamp, a second clamp and support structures.

The same reference number represents the same element to the same type of element on all drawings, unless stated otherwise.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims.

In the following description, well-known functions or constructions by the man skilled in the art are not described in detail since they would obscure the invention in unnecessary detail.

The words upper side, lower side, direction, opposite direction etc, should be understood as providing indications of the positioning of elements they describe under normal conditions of use.

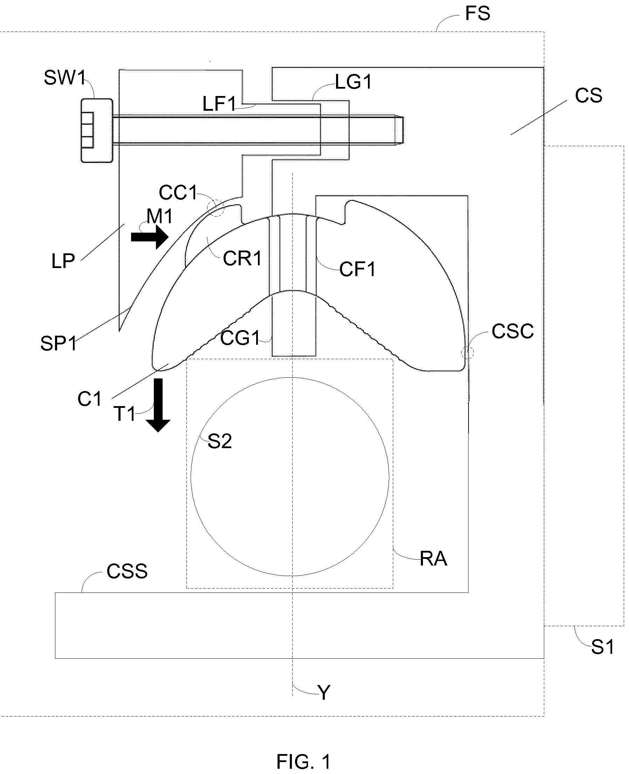

Referring to **FIG. 1****,** a schematic view of a first example of a fixing system according to the invention is depicted. Said schematic view is a cross-sectional view of the first example of a fixing system FS.

A first structure S1 is attached to the fixing system FS. The first structure S1 is a structure to be maintained on a support structure S2.

For example, the first structure S1 is a radiofrequency antenna radiating in heights. The first structure S1 is to be maintained at a given altitude and attached to the support structure S2 being a mast or pylon.

In another non limiting example the first structure S1 is a lamp system for street lighting, to be maintained by the fixing system FS on top of a pole, said pole being the support structure S2.

The fixing system FS further comprises a clamp support CS. The clamp support CS is adapted to hold the first structure S1. In a non limiting example, the clamp support CS further comprises means to be firmly attached to the first structure S1. In a non limiting example, the clamp support CS and the first structure S1 are maintained together with screws and bolts. In an embodiment not depicted on figure FIG. 1, the first structure S1 comprises the clamp support CS.

The clamp support CS adjoins a reception area RA. The reception area RA is an area wherein the support structure S2 is located.

In an embodiment, the clamp support CS is adapted to establish one or more contact points with the support structure S2.

The fixing system FS further comprises a first clamp guide CG1. Said first clamp guide CG1 extends longitudinally along a first axis Y. Said first axis Y is traversing the support structure S2.

In an embodiment, the first clamp guide CG1 is comprised in the clamp support CS. In a non limiting example, the first clamp guide CG1 is located at a first extremity of the clamp support CS.

The fixing system FS further comprises a first clamp C1. In an embodiment, the first clamp C1 is preferably shaped as a fraction of a disc area with a concave side and a convex side similar to a crescent shape. Such crescent shape advantageously enables the first clamp C1 to establish at least two pressure points on the support structure S2. The crescent shape of the first clamp C1 allows also said first clamp C1 to fit various kind of support structure S2.The first clamp C1 is slidingly mounted on a first clamp guide CG1. By slidingly mounted terms, it is meant the first clamp guide CG1 is adapted to hold the first clamp C1 in such a way that the first clamp C1 can slide along the first clamp guide CG1.

The clamp support CS, the first clamp guide CG1 and the reception area RA are positioned along the first axis Y. The reception area RA is located in-between the first clamp guide CG1 and an area of the clamp support CS. In an embodiment, the reception area RA is the area comprised between a part of the clamp support CS and the first clamp C1. In a non limiting example, the part of the clamp support is a second extremity of said clamp support CS that faces the interior of the crescent shape of the first clamp C1, the reception area RA being comprised in-between said second extremity of the clamp support CS and said interior of the first clamp C1. In an embodiment, the reception area RA is defined by the dimensions of the clamp support CS which is sized to partially cover the circumference of the support structure S2. In another embodiment, the clamp support CS surrounds about half of the circumference of the support structure S2.

In an embodiment, the first clamp guide CG1 comprises a cross-sectional profile perpendicular to the sliding movement of the first clamp C1, said profile is shaped with a 'H' profile in an embodiment. Alternatively in other non limiting examples, said cross-sectional profile of the first clamp guide CG1 is shaped with a 'T' profile or a 'X' profile. Advantageously the shape of the cross-sectional profile of the first clamp guide CG1 allows holding the first clamp C1 while first clamp C1 is oriented in any direction.

The fixing system FS further comprises a locket push LP. Said locket push LP comprises a first sliding profile SP1 adapted for being in contact with the first clamp C1. The first sliding profile SP1 is a fixed part of the locket push LP. For example, the first sliding profile SP1 is adapted for coming into contact with a portion of the first clamp C1. The first sliding profile SP1 establishes a first clamp contact CC1 with said portion of the first clamp C1.

In an embodiment, the first clamp C1 further comprises a first rib CR1. Said first rib CR1 is a protuberance from the first clamp C1 for establishing the first clamp contact CC1 with the first sliding profile SP1

The locket push LP is a moving part of the fixing system FS, and moves towards the first clamp C1. By moving towards the first clamp C1, the locket push LP establishes said first clamp contact CC1 between the first sliding profile SP1 and the first portion of the first clamp C1.

The possible movement of the first clamp C1 along the first clamp guide CG1 is a sliding movement from an extremity of said first clamp guide CG1, and directed along the first axis Y towards the reception area RA and the clamp support CS. The first clamp C1 slides along the first clamp guide CG1 into said reception area RA and up to the support structure S2.

The first movement M1 of the first sliding profile SP1 towards the first clamp C1 induces thereby a first translation movement T1 of the first clamp C1, guided by the first clamp guide CG1. The first translation movement T1 of the first clamp C1 is directed from the extremity of said first clamp guide CG1 to the reception area RA. The first translation movement T1 of the first clamp C1 reduces the size of the reception area RA. The area defined by the reception area RA is getting smaller as the first clamp C1 translates of the first clamp guide CG1. As the support structure S2 is located in said reception area RA which space is being reduced, the translation movement T1 of the first clamp C1 allows said first clamp C1 to move into contact with the support structure S2 and to clamp onto said support structure S2. In an embodiment, said support structure S2 is clamped between the first clamp C1 and the clamp support CS.

In an embodiment the clamping of the fixing system FS on the support structure S2 is achieved by the first clamp C1 applying at least a pressure point on the support structure S2, said support structure S2 being in contact with the side CSS of the clamp support CS.

As the first sliding profile SP1 from the locket push LP moves towards the first clamp C1, the first clamp contact CC1 moves according to the profile of the first sliding profile SP1. The course of the first clamp contact CC1 on the first sliding profile SP1 is greater than the course of the first sliding profile SP1 towards the first clamp C1. The profile of the first sliding profile SP1 is designed to convert the magnitude of the first movement M1 of the first sliding profile SP1 towards the first clamp C1 into a greater magnitude of the first translation movement T1 of the first clamp C1.

Advantageously, the first rib CR1 increases the ratio of the conversion of the amplitude of the first movement M1 of the first sliding profile SP1 towards the first clamp C1 into the first translation movement T1 of the first clamp C1 with greater amplitude. In a non limiting example, the first rib CR1 is shaped as a fraction of an ovoid area. The first clamp contact CC1 follows a course along the ovoid shape of the first rib CR1, said course being greater than the course of the first sliding profile SP1.

In an embodiment, the clamp support CS comprises the first clamp guide CG1. The first clamp guide CG1 is then a fixed part of the clamp support CS, said first clamp guide CG1 extending longitudinally along the first axis Y through the reception area RA.

In another embodiment, the clamp support CS further comprises a first locket push guide LG1. Said locket push guide LG1 is guiding the locket push LP that further comprises a first locket push flange LF1. Advantageously the first locket push guide LG1 and the first locket push flange LF1 cooperate to facilitate the first movement M1 of the first sliding profile SP1 towards the first clamp C1.

In yet another embodiment the locket push LP and the clamp support CS are clamped with a first screw SW1. Said first screw SW1 cooperates with said clamp support CS and said locket push LP to firmly maintain them in a fixed position. In said fixed position, the first clamp C1 is clamping the support structure S2.

In yet another embodiment, the first screw SW1 is inserted through the first locket push flange LF1. The course of the first screw SW1 towards the first locket plush flange LF1 generates the first movement M1 of the first sliding profile SP1 towards the first clamp C1. Said first movement M1 of the first sliding profile SP1 creates then the first translation movement T1 of the first clamp C1 towards the clamp support CS. Once the first clamp C1 is clamped on the support structure S2, the first screw SW1 maintains the locket push LP and the clamp support CS together, so that the clamping by the first clamp C1 is continuously applied on the support structure S2. In a non limiting example, the clamping of the first clamp C1 and the clamp support CS from the fixing system FS, onto the support structure S2 is dependent from the torque of the first screw SW1.

In yet another embodiment, the first clamp C1 is establishing a contact point, labeled as clamp support contact CSC, with the clamp support CS. The clamp support contact CSC moves along the first translation movement T1 of the first clamp C1 towards the support structure C2. Advantageously said clamp support contact CSC between the first clamp C1 and the clamp support CS allows balancing pressures of the clamping of the first clamp C1 onto the support structure S2, and the pressure between the side CSS of the clamp support CS and the support structure C2.

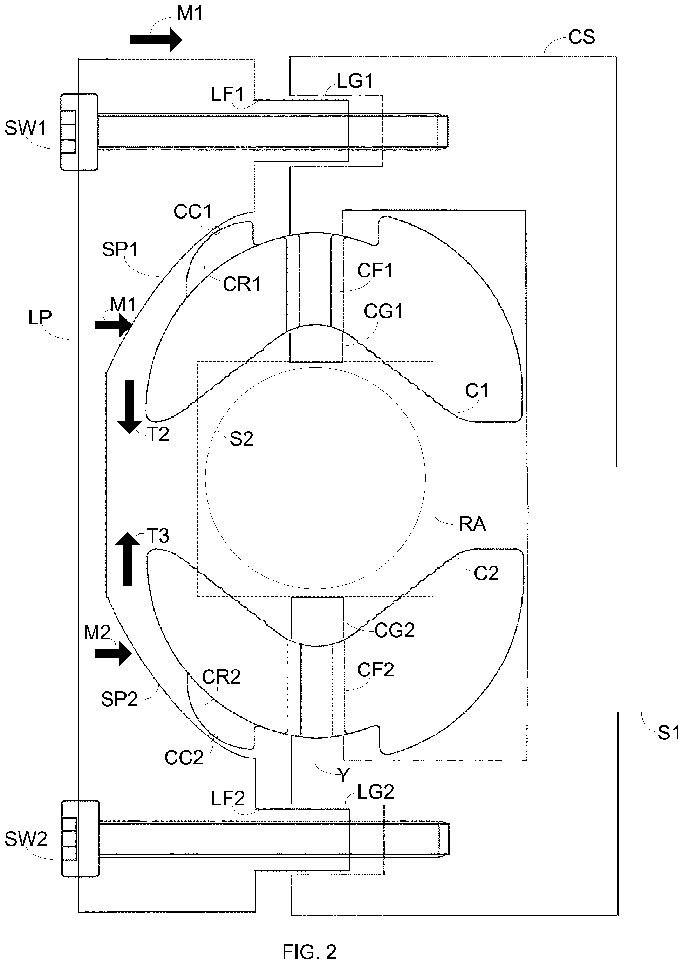

Referring to figure **FIG. 2****,** a schematic view of second example of a fixing system according to the invention is depicted. Said schematic view is a cross-sectional view of the second example of the fixing system FS.

The fixing system FS further comprises a second clamp guide CG2. The longitudinal axis of said second clamp guide CG2 is oriented towards the reception area RA. In an embodiment, the longitudinal axis of the first clamp guide CG1 and the longitudinal axis of the second clamp guide CG2 are aligned along the first axis Y. The reception area RA is then comprised between the first clamp guide CG1 and the second clamp guide CG2. In this embodiment, the first clamp guide CG1 and the second clamp guide CG2 are on opposite sides of the support structure S2 that is located in the reception area RA.

In an embodiment, the second clamp guide CG2 is comprised in the clamp support CS. In a non limiting example, the second clamp guide CG2 is located at second extremity of the clamp support CS.

The second clamp guide CG2 guides a second clamp C2 comprised in the fixing system FS. The second clamp C2 is slidingly mounted on said second clamp guide CG2. The second clamp C2 comprises a second clamp flange CF2 that cooperates with the second clamp guide CG2.

In an embodiment, the second clamp guide CG2 comprises a cross-sectional profile perpendicular to the sliding movement of the second clamp C2, said cross-sectional profile being shaped with a 'H' profile in a non limiting example. Alternatively in other non limiting examples, said section profile of the second clamp guide CG2 is shaped with a 'T' profile or a 'X' profile.

In this example, the locket push LP has a 'U' shape which interior is oriented towards the reception area RA that comprises the support structure S2. The locket push LP is designed to surround partially about half of the support structure S2. Said locket push LP further comprises a second sliding profile SP2. In a preferred embodiment the respective profiles from the first sliding profile SP1 and the second sliding profile S2 are similar. In another embodiment the profile from the second sliding profile SP2 is different from the first sliding profile SP1.

The second sliding profile SP2 is adapted to get into contact with the second clamp C2 by establishing a second clamp contact CC2 with a portion of the second clamp C2.

The second movement M2 of the second sliding profile SP2 towards the second clamp C2 induces thereby the second translation movement T2 of the second clamp C2 towards the reception area RA.

As the second sliding profile SP2 moves towards the second clamp C2, the second clamp contact CC2 moves according to the profile of the second sliding profile SP2. The course of the second clamp contact CC2 on the sliding profile SP2 is greater than the course of second sliding profile SP2 towards the second clamp C2. The profile of the second sliding profile SP2 is designed to convert the magnitude of the second movement M2 of the second sliding profile SP2 towards the second clamp C2 into a greater magnitude of the translation movement T2 of the second clamp C2.

In an embodiment, the second clamp C2 further comprises a second rib CR2. Said second rib CR2 is a protuberance from the second clamp C2 for establishing the second clamp contact CC2 with the second sliding profile SP2. Advantageously, the second rib CR2 improves the conversion of the amplitude of the second movement M2 of the second sliding profile SP2 towards the second clamp C2 into the second translation movement T2 of the second clamp C2 with greater amplitude.

In an embodiment, the fist clamp guide CG1 and the second clamp guide CG2 are aligned on the first axis Y. The first movement M1 of the first sliding profile SP1 towards the first clamp C1 creates the first translation movement T1 of the first clamp C1 along said first axis Y and towards the second clamp C2. Similarly, the second movement M2 of the second sliding profile SP2 towards the second clamp C2 creates the second translation movement T2 of the second clamp C2 along the first axis Y and towards the first clamp C1. The respective translation movements (T1; T2) of the first clamp C1 and the second clamp C2 towards the support structure S2 allow said support structure S2 to be clamped between the first clamp C1 and the second clamp C2.

In an embodiment, the first sliding profile SP1 and the second sliding profile SP2 are fixed parts of the locket push LP. The respective first movement M1 and second movement M2 are resulting from the movement of the locket push LP towards the first clamp C1 and the second clamp C2. The movement of the locket push LP towards the first clamp C1 and the second clamp C2 creates the first translation movement T1 of the first clamp C1, guided by the first clamp guide CG1, and creates the second translation movement T2 of the second clamp C2, guided by the second clamp guide CG2. The first translation movement T1 of the first clamp C1 is directed from the extremity of the first clamp guide CG1 towards the reception area RA. Analogously the second translation movement T2 of the second clamp C2 is directed from the extremity of the second clamp guide CG2 towards the reception area RA.

The respective translation movements (T1; T2) of the first clamp C1 and the second clamp C2 towards the support structure S2 allow said first clamp C1 and second clamp C2 to clamp the support structure S2. The translation movements (T1; T2) allow applying gradually the pressure of the clamping of the clamps (C1; C2) on the support structure S2. In a fixed position, the mechanical efforts of the clamping of the fixing system FS are advantageously distributed between the first clamp C1 and the second clamp C2, and with the locket push LP maintained on the clamp support CS.

The clamp support CS further comprises a second locket push guide LG2, which guides a second locket push flange LF2. Advantageously the second locket push guide LG2 and the second locket push flange LF2 cooperate to facilitate the second movement M2 of the second sliding profile SP2 towards the second clamp C2.

In another embodiment the locket push LP and the clamp support CS are clamped with a second screw SW2. Said second screw SW2 cooperates with said clamp support CS and said locket push LP to firmly maintain them in a fixed position. In said fixed position, the second clamp C2 is clamping the support structure S2.

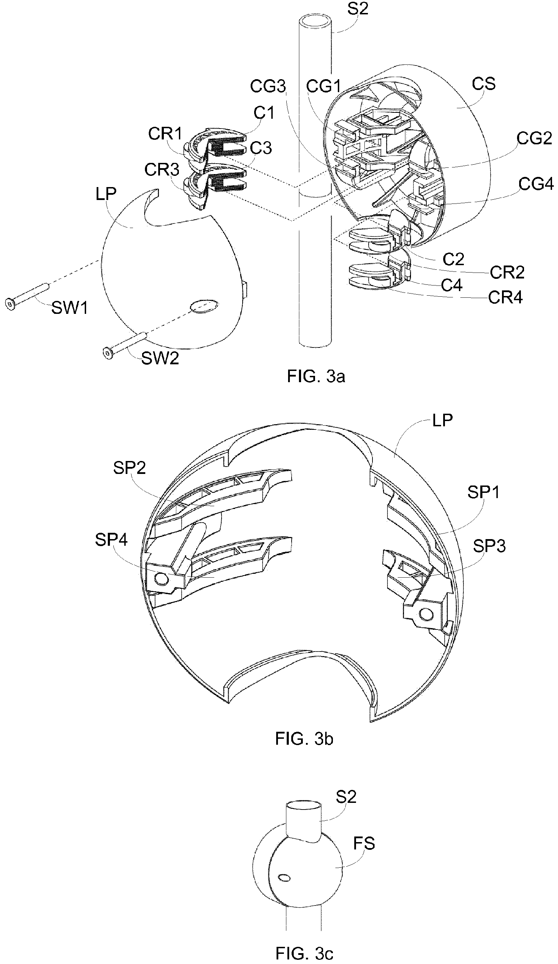

Referring to figure **FIG. 3a****,** a schematic view of a third example of a fixing system according to the invention is depicted.

The fixing system FS further comprises a third clamp C3 slidingly mounted on a third clamp guide CG3 and a fourth clamp C4 slidingly mounted on a fourth clamp guide CG4. The third clamp C3 and the third clamp guide CG3 are placed on the same side of the reception area RA than the first clamp C1 and the first clamp guide CG1, whereas the fourth clamp C4 and the fourth clamp guide CG4 are placed on the same side of the reception area RA than the second clamp C2 and the second clamp guide CG2. In this embodiment, the first clamp guide CG1, the second clamp guide CG2, the third clamp guide CG3 and the fourth clamp guide CG4 are comprised in the clamp support. Such arrangement of the clamps and the clamp guides may vary according to alternative embodiments.

In an embodiment, the third clamp guide CG3 and the fourth clamp guide CG4 are extending longitudinally along a second axis parallel to the first axis Y. The reception area RA, the third clamp guide CG3, and the fourth clamp guide CG4 are aligned along the second axis, and the third clamp guide CG3 and the fourth clamp guide CG4 facing each other with the reception area RA in-between said clamp guides.

The third clamp C3 comprises a third rib CR3 and the fourth clamp C4 comprises a fourth rib CR4. The third rib CR3 and fourth rib CR4 respectively establish a third clamp contact with a third sliding profile SP3 and a fourth clamp contact with a fourth sliding profile SP4.

Referring to figure **FIG. 3b****,** a schematic view of a locket push from a third example of a fixing system according to the invention is depicted. The locket push LP further comprises the third sliding profile SP3 cooperating with the third clamp C3 and the fourth sliding profile SP4 cooperating with the fourth clamp C4. In this embodiment, the locket push LP also comprises a half spherical cover, on which are disposed the first sliding profile SP1 and the third sliding profile SP3 on one side, and the second sliding profile SP2 and the fourth sliding profile SP4 on an opposite side of the locket push LP. Advantageously the half spherical cover protects the inside of the fixing system FS from external conditions.

The movement of the locket push LP towards the clamp support CS is converted into translation movements of the first clamp C1 and the third clamp C3 sliding respectively on the first clamp guide CG1 and the third clamp guide CG3. The movement of the locket push LP towards the clamp support CS is also converted into translation movements of the second clamp C2 and the fourth clamp C4, sliding respectively on the second clam guide CG2 and on the fourth clamp guide CG4. Said translation movements are towards the support structure S2, until the four clamps are in contact with said support structure S2.

Referring to figure **FIG. 3c****,** another schematic view of a third example of a fixing system according to the invention is depicted. The first clamp C1, the second clamp C2, the third clamp C3 and the fourth clamp C4 are clamping the support structure S2, and the locket push LP and the clamp support CS are in a fixed position. The locket push LP and the clamp support are locked together with the first screw SW1 and the second screw SW2. The fixing system FS that holds the support structure S1 (not depicted on figures FIG. 3a, FIG. 3b and FIG. 3c) is then maintained on the support structure S2.

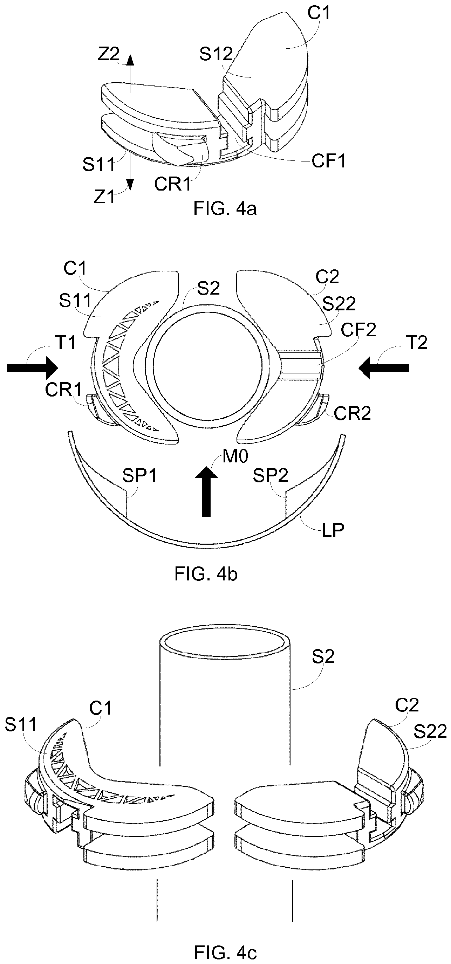

The figure **FIG. 4a** depicts a schematic view of a first clamp according to the invention. The first clamp flange CF1 is designed to cooperate with the section profile of the first clamp guide CG1 shaped with a 'H' profile.

The upper side S11 of the first clamp C1 is directed in the first direction Z1, whereas the lower side S12 of the first clamp C1 is directed in the second direction Z2, said second direction Z2 is the opposite direction from first direction Z1.

In an embodiment the first clamp C1 is slidingly mounted on the first clamp guide CG1 with the upper side S11 oriented in the first direction Z1. In another embodiment, the same first clamp C1 is slidingly mounted on the first clamp guide CG1 with the upper side S11 oriented in the second direction Z2. Advantageously, the first clamp C1 is adapted to be slidingly mounted on the first clamp guide CG1 in two opposite directions.

In another embodiment the lower side S12 is an open surface of the first clamp C1 traversed by the first of the first clamp flange CF1. The upper side S11 is a closed surface of the first clamp C1. The open geometry of the lower side S12 allows the first clamp C1 to slide on the first clamp guide CG1, wherein the sliding is constrained by the contact of the upper side S11 with either one extremity of the first clamp guide CG1, or the contact of the first clamp C1 with the support structure S2.

The figure **FIG. 4b** depicts a schematic view of a first clamp, a second clamp and a locket push according to the invention. In this embodiment the positioning of the first clamp C1 and the second clamp C2 while being clamped on the support structure S2 is schematized.

The movement M0 of the locket push LP towards the first clamp C1 and the second clamp C2 creates the respective first translation movement T1 of the first clamp C1 and the second translation movement T2 of the second clamp C2.

In this embodiment, the first clamp C1 and the second clamp C2 are on opposite sides of the support structure S2. The orientation of the lower side S22 of the second clamp C2 is the same than the orientation of the upper side S11 of the first clamp C1. The orientation of said second clamp C2 is flipped compared to the orientation of the first clamp C1.

In an embodiment, a clamp such as the first clamp C1 is adapted to clamp the support structure S2 either when the side S11 of said first clamp C1 is in the first direction Z1 or either when said side S11 of said first clamp C1 is in the second direction Z2. Advantageously, the design of a clamp such as the first clamp C1 allows said clamp to be slidingly mounted on the first clamp guide CG1, or to be slidingly mounted on the second clamp guide CG2. It reduces cost production of such clamps by limiting to one the number of design to use. Such clamps are also convenient in terms of use, since a technician installing the fixing system FS does not need to be careful on the direction of the upper side of the clamps.

The figure **FIG. 4c** depicts a schematic view of a first clamp and a second clamp and a support structure according to the invention.

The positioning of the second clamp C2 is flipped compared to the positioning of the first clamp C1.

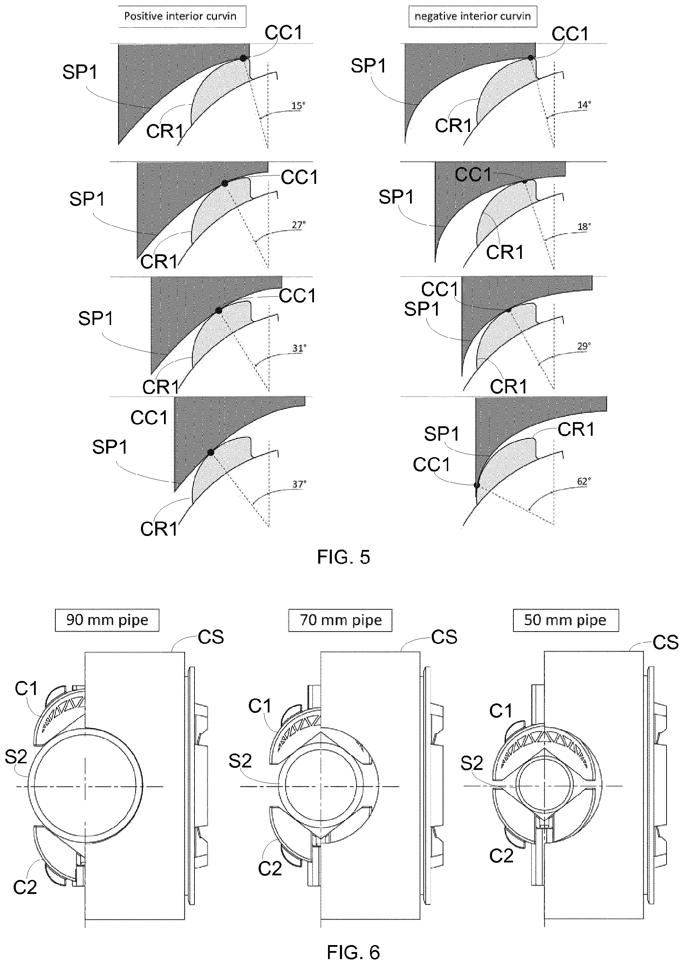

Referring to figure **FIG. 5****,** a schematic view of sliding profiles according to the invention is depicted.

On the left and right columns of the figure FIG. 5, the first sliding profile SP1, the first clamp contact CC1 and the first rib CR1 are depicted in various positions, said positions illustrating the course of first clamp contact CC1 while the first sliding profile moves towards the first clamp C1.

On the left column of the figure FIG. 5, the first sliding profile SP1 is designed with a profile of a positive interior curving. The first clamp contact CC1 follows a course on the first rib CR1 and on the first sliding profile SP1. Said course of the first clamp contact CC1 is dependent on the positive interior curving profile of the first sliding profile SP1.

On the right column of the figure FIG. 5, the first sliding profile SP1 is designed with a profile of a negative interior curving. The first clamp contact CC1 follows a course on the first rib CR1 and on the first sliding profile SP1. Said course of the first clamp contact CC1 is dependent on the positive interior curving profile of the first sliding profile SP1.

In other embodiments not depicted on figure FIG. 5, the first sliding profile SP1 is designed with a profile of a linear curving, or with a profile of a positive external curving, or with a profile of a wave interior curving.

Referring to figure **FIG. 6****,** a schematic view of a fourth example of a fixing system and tubular support structures according to the invention is depicted. Said schematic view is a cross-sectional view of the fourth example of the fixing system FS adapted on tubular support structures with varying diameters.

On the left column of the figure FIG. 6, the support structure S2 is a pipe with a diameter of 90mm, on which the first clamp C1 and the second clamp C2 are clamped for attaching the fixing system FS to said pipe.

On the middle column of the figure FIG. 6, the support structure S2 is a pipe with a diameter of 70mm, on which the first clamp C1 and the second clamp C2 are clamped for attaching the fixing system FS to said pipe.

On the right column of the figure FIG. 6, the support structure S2 is a pipe with a diameter of 50mm, on which the first clamp C1 and the second clamp C2 are clamped for attaching the fixing system FS to said pipe.

In non limiting examples not depicted on figure FIG. 6, the support structure S2 is a positive conical pipe or a negative conical pipe.

In these non limiting examples, the same fixing system FS is advantageously adapted to be fixed to various sized support structure S2.

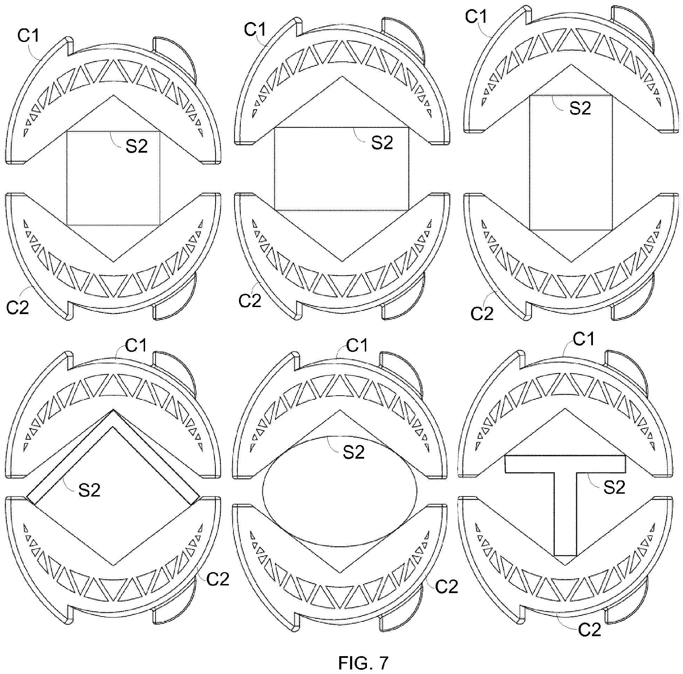

Referring to figure **FIG. 7****,** a schematic view of a first clamp, a second clamp and support structures is depicted. Said schematic view is a cross-sectional view of the first clamp C1 and the second clamp C2, clamped on support structures S2 with varying cross-sectional profiles.

On the left column and first raw of the figure FIG. 7, the first clamp C1 and the second clamp C2 are clamping the support structure S2, said support structure S2 is designed with a square section profile.

On the middle column and first raw of the figure FIG. 7, the first clamp C1 and the second clamp C2 are clamping the support structure S2, said support structure S2 is designed with a rectangular section profile.

On the right column and first raw of the figure FIG. 7, the first clamp C1 and the second clamp C2 are clamping the support structure S2, said support structure S2 is designed with another rectangular section profile.

On the left column and second raw of the figure FIG. 7, the first clamp C1 and the second clamp C2 are clamping the support structure S2, said support structure S2 is designed with a 'L' shaped section profile.

On the middle column and second raw of the figure FIG. 7, the first clamp C1 and the second clamp C2 are clamping the support structure S2, said support structure S2 is designed with an ovoid shaped section profile.

On the right column and second raw of the figure FIG. 7, the first clamp C1 and the second clamp C2 are clamping the support structure S2, said support structure S2 is designed with a 'T' shaped section profile.

In these non limiting examples, the fixing system FS is advantageously adapted to be fixed to support structure S2 with various shapes.

The fixing system FS preferably comprises a majority of aluminum that advantageously offers a good compromise of robustness and weight in a non limiting example. In another example the fixing system FS comprises a majority of plastic. In yet another embodiment the fixing system FS comprises a combination of aluminum elements and plastic elements.

In the present embodiments, the fixing system FS is a system for holding the first structure S1 on the support structure S2.

The fixing system FS is a reliable system to be clamped on the support structure S2 located on the reception area RA. Indeed said fixing system FS comprises a small number of mechanical parts. A small number of mechanical parts reduces the risk of aging or damages incurred by environment compared to a system comprising many parts, and makes the fixing system FS more reliable.

The small number of parts of the fixing system FS is also beneficial in terms of human operations to use said fixing system FS. Compared to other systems, less tools, screws, nuts etc are needed to have an effective clamping.

Moreover the fixing system FS converts the movement of the locket push LP towards the clamps (C1; C2; C3; C4), into the translation movements of the clamps towards the support structure S2. Said conversion profitably reduces the human effort to firmly fix the first structure S1 on the support structure S2. The fixing system FS is advantageously adapted to equitably split the mechanical stress of the clamping, which improves the lifetime of the fixing system FS.

In an embodiment, the first clamp C1 and the second clamp C2 are two clamps designed with the same properties and shapes, as the fixing system FS advantageously allows using the same clamp in the first clamp C1's position, or in the second clamp C2's position. Such flexibility reduces manufacturing costs of the fixing system FS. It eases also installation of the fixing system FS.

The fixing system FS is advantageous to be used in various kind of support structure S2. The fixing system FS is able to hold the first structure S1 on the support structure S2, said support structure S2 being a mast, a standard pipe, a positive or negative conical pipe etc.

The fixing system FS is a robust and flexible solution to fix the first structure S1 on the support structure S2.

## Claims

1. A fixing system (FS), adapted for holding a first structure (S1) on a support structure (S2), said fixing system (FS) comprising:
- a first clamp guide (CG1) extending longitudinally along a first axis (Y),
- a first clamp (C1) slidingly mounted on the first clamp guide (CG1),
- a clamp support (CS) adjoining a reception area (RA) adapted for receiving the support structure (S2), said reception area (RA) being comprised between a part of the clamp support (CS) and the first clamp (C1),
- a locket push (LP) comprising a first sliding profile (SP1) adapted for coming into contact with a portion of the first clamp (C1),
said first sliding profile (SP1) of the locket push (LP) configured to move towards the first clamp (C1), thereby inducing a first translation movement (T1) of said first clamp (C1) along the first clamp guide (CG1), said first translation movement (T1) configured to reduce the size of the reception area (RA), therefore allowing the fixing system (FS) to clamp the support structure (S2) located in the reception area (RA) against the clamp support (CS), wherein the first clamp (C1) comprises a crescent shape for establishing at least two pressure points on the support structure (S2), **characterized in that** the first sliding profile (SP1) comprises an interior curving adapted to convert a movement (M1) of said first sliding profile (SP1) towards the first clamp (C1) into the first translation movement (T1) of the first clamp (C1) towards the clamp support (CS) with a greater amplitude than the amplitude from said movement of the first sliding profile (SP1), the first movement (M1) being perpendicular to the first axis (Y) and the first translation movement (T1) being parallel to the first axis (Y).

2. A fixing system (FS) according to claim 1, wherein the clamp support (CS) comprises the first clamp guide (CG1).

3. A fixing system (FS) according to any of the claims 1 to 2, wherein the clamp support (CS) comprises a first locket push guide (LG1), and the locket push (LP) further comprising a first locket push flange (LF1) guided by the first locket push guide (LG1) during the movement of the first sliding profile (SP1).

4. A fixing system (FS) according to any of the claims 1 to 3, wherein the first clamp guide (CG1) comprises a cross-sectional profile perpendicular to the direction of the first translation movement (T1) of the first clamp (C1), said cross-sectional profile being shaped for holding the first clamp (C1), and wherein the first clamp (C1) further comprises a first clamp flange (CF1) adapted to cooperate with the cross-sectional profile of the first clamp guide (CG1) during the movement of first sliding profile (SP1).

5. A fixing system (FS) according to claim 4, wherein the cross-sectional profile of the clamp guide (CG1) is a 'H' profile, or a 'T' profile, or a 'X' profile.

6. A fixing system (FS) according to any of the claims 1 to 5, wherein the locket push (LP) and the clamp support (CS) are clamped with a first screw (SW1).

7. A fixing system (FS) according to claims 3 and 6, wherein the first screw (SW1) in a fixed position is configured to be inserted through the first locket push flange (LF1).

8. A fixing system (FS) according to any of the claims 1 to 7, wherein the first clamp (C1) comprises a first rib (CR1), said first rib (CR1) being the portion of the first clamp (C1) for establishing a first clamp contact (CC1) with the first sliding profile (SP1).

9. A fixing system (FS) according to any of the claims 1 to 8, wherein the upper side (S11) of the first clamp (C1) is oriented in a first direction (Z1), or said upper side (S11) of the first clamp (C1) being oriented in a second direction (Z2) opposite to first direction (Z1).

10. A fixing system (FS) according to any of the claims 1 to 9, wherein the first clamp (C1) is adapted to clamp the fixing system (FS) on the support structure (S2) by applying at least a pressure point on said support structure (S2).

11. A fixing system (FS) according to any of the claims 1 to 10, wherein the support structure (S2) is a pipe with a circular or ovoid section profiles, or is a support shaped with a rectangular section profile, or is a support shaped with a 'L' section profile, or is a support shaped with a 'T' section profile.

12. A fixing system (FS) according to any of the claims 1 to 11, further comprising:
- a second clamp guide (CG2) extending longitudinally along the first axis (Y),
- a second clamp (C2) slidingly mounted on the second clamp guide (CG2),
- the locket push (LP) further comprising a second sliding profile (SP2) adapted for coming into contact with a portion of the second clamp (C2),
said second sliding profile (SP2) of the locket push (LP) being adapted to move towards the second clamp (C2), thereby inducing a second translation movement (T2) of said second clamp (C2) along the second clamp guide (CG2) towards the first clamp (C1), therefore allowing the fixing system (FS) to clamp the support structure (S2) located in the reception area (RA) between the first clamp (C1) and the second clamp (C2).

13. A fixing system (FS) according to claim 12, wherein the shape of the locket push (LP) is a 'U' shape, said shape adjoining the reception area (RA), a first extremity of the locket push (LP) comprising the first sliding profile (SP1), and a second extremity of the locket push (LP) comprising the second sliding profile (SP2).

14. A fixing system (FS) according to any of the claims 12 to 13, wherein the fixing system (FS) further comprises:
- a third clamp guide (CG3) extending longitudinally along a second axis parallel to the first axis (Y),
- a fourth clamp guide (CG4) extending longitudinally along the second axis,
- a third clamp (C3) slidingly mounted on the third clamp guide,
- a fourth clamp (C4) slidingly mounted on the fourth clamp guide,
- the locket push (LP) further comprising a third sliding profile (SP3) and a fourth sliding profile (SP4), said first sliding profile (SP1) being adapted for coming into contact with the third clamp (C3), and said fourth sliding profile (SP4) being adapted for coming into contact with the fourth clamp (C4),
said third sliding profile (SP3) of the locket push (LP) being adapted to move towards the third clamp (C3) creating a third translation movement of said third clamp (C3) along the third clamp guide (CG3) towards the fourth clamp (C4), and said fourth sliding profile (SP4) being adapted to move towards the fourth clamp (C4) creating a fourth translation movement of said fourth clamp (C4) towards the third clamp (C3), therefore allowing the fixing system (FS) to further clamp the support structure (S2) located in the reception area (RA) between the third clamp (C3) and the fourth clamp (C4).

## Patentansprüche

1. Befestigungssystem (FS), das zum Halten einer ersten Struktur (S1) auf einer Trägerstruktur (S2) ausgelegt ist, wobei das Befestigungssystem (FS) umfasst:
- eine erste Klammerführung (CG1), die sich in Längsrichtung entlang einer ersten Achse (Y) erstreckt,
- eine erste Klammer (C1), die gleitend auf der ersten Klammerführung (CG1) montiert ist,
- einen Klammerträger (CS), der an einen Aufnahmebereich (RA) angrenzt, der zur Aufnahme der Trägerstruktur (S2) ausgelegt ist, wobei der Aufnahmebereich (RA) zwischen einem Teil des Klammerträgers (CS) und der ersten Klammer (C1) liegt,
- einen Schieberiegel (LP), der ein erstes Gleitprofil (SP1) umfasst, das dazu ausgelegt ist, mit einem Abschnitt der ersten Klammer (C1) in Kontakt zu kommen,
wobei das erste Gleitprofil (SP1) des Schieberiegels (LP) dazu konfiguriert ist, sich in Richtung der ersten Klammer (C1) zu bewegen, wodurch eine erste Translationsbewegung (T1) der ersten Klammer (C1) entlang der ersten Klammerführung (CG1) induziert wird, wobei die erste Translationsbewegung (T1) dazu konfiguriert ist, die Größe des Aufnahmebereichs (RA) zu verringern, wodurch es dem Befestigungssystem (FS) ermöglicht wird, die in dem Aufnahmebereich (RA) befindliche Trägerstruktur (S2) gegen den Klammerträger (CS) zu klemmen,
wobei die erste Klammer (C1) eine Halbmondform zum Herstellen von mindestens zwei Druckpunkten auf der Trägerstruktur (S2) aufweist, **dadurch gekennzeichnet, dass**
das erste Gleitprofil (SP1) eine innere Krümmung aufweist, die dazu ausgelegt ist, eine Bewegung (M1) des ersten Gleitprofils (SP1) in Richtung der ersten Klammer (C1) in die erste Translationsbewegung (T1) der ersten Klammer (C1) in Richtung des Klammerträgers (CS) mit einer größeren Amplitude als die Amplitude aus der Bewegung des ersten Gleitprofils (SP1) umzuwandeln, wobei die erste Bewegung (M1) senkrecht zu der ersten Achse (Y) verläuft und die erste Translationsbewegung (T1) parallel zu der ersten Achse (Y) verlauft.

2. Befestigungssystem (FS) nach Anspruch 1, wobei der Klammerträger (CS) die erste Klammerführung (CG1) umfasst.

3. Befestigungssystem (FS) nach einem der Ansprüche 1 bis 2, wobei der Klammerträger (CS) einen erste Schieberiegelführung (LG1) aufweist und der Schieberiegel (LP) ferner einen ersten Schieberiegelflansch (LF1) aufweist, der bei der Bewegung des ersten Gleitprofils (SP1) von der ersten Schieberiegelführung (LG1) geführt wird.

4. Befestigungssystem (FS) nach einem der Ansprüche 1 bis 3, wobei die erste Klammerführung (CG1) ein Querschnittsprofil senkrecht zur Richtung der ersten Translationsbewegung (T1) der ersten Klammer (C1) aufweist, wobei das Querschnittsprofil zum Halten der ersten Klammer (C1) geformt ist, und wobei die erste Klammer (C1) ferner einen ersten Klammerflansch (CF1) aufweist, der dazu ausgelegt ist, mit dem Querschnittsprofil der ersten Klammerführung (CG1) während der Bewegung des ersten Gleitprofils (SP1) zusammenzuwirken.

5. Befestigungssystem (FS) nach Anspruch 4, wobei das Querschnittsprofil der Klammerführung (CG1) ein H-Profil, oder ein T-Profil, oder ein X-Profil ist.

6. Befestigungssystem (FS) nach einem der Ansprüche 1 bis 5, wobei der Schieberiegel (LP) und der Klammerträger (CS) mit einer ersten Schraube (SW1) geklemmt werden.

7. Befestigungssystem (FS) nach einem der Ansprüche 3 und 6, wobei die erste Schraube (SW1) in einer festen Position so konfiguriert ist, dass sie durch den ersten Schieberiegelflansch (LF1) eingeführt werden kann.

8. Befestigungssystem (FS) nach einem der Ansprüche 1 bis 7, wobei die erste Klammer (C1) eine erste Rippe (CR1) aufweist, wobei die erste Rippe (CR1) der Abschnitt der ersten Klammer (C1) zum Herstellen eines ersten Klammerkontakts (CC1) mit dem ersten Gleitprofil (SP1) ist.

9. Befestigungssystem (FS) nach einem der Ansprüche 1 bis 8, wobei die Oberseite (S11) der ersten Klammer (C1) in einer ersten Richtung (Z1) ausgerichtet ist, oder die Oberseite (S11) der ersten Klammer (C1) in einer zweiten Richtung (Z2) entgegengesetzt zur ersten Richtung (Z1) ausgerichtet ist.

10. Befestigungssystem (FS) nach einem der Ansprüche 1 bis 9, wobei die erste Klammer (C1) dazu ausgelegt ist, das Befestigungssystem (FS) an der Trägerstruktur (S2) zu klemmen, indem mindestens ein Druckpunkt auf die Trägerstruktur (S2) ausgeübt wird.

11. Befestigungssystem (FS) nach einem der Ansprüche 1 bis 10, wobei die Trägerstruktur (S2) ein Rohr mit einem kreisförmigen oder eiförmigen Querschnittsprofil ist, oder ein Träger mit einem rechteckigen Querschnittsprofil ist, oder ein Träger mit einem L-Profil ist, oder ein Träger mit einem T-Profil ist.

12. Befestigungssystem (FS) nach einem der Ansprüche 1 bis 11, ferner umfassend:
- eine zweite Klammerführung (CG2), die sich in Längsrichtung entlang der ersten Achse (Y) erstreckt,
- eine zweite Klammer (C2), die gleitend auf der zweiten Klammerführung (CG2) montiert ist,
- wobei der Schieberiegel (LP) ferner ein zweites Gleitprofil (SP2) umfasst, das dazu ausgelegt ist, mit einem Abschnitt der zweiten Klammer (C2) in Kontakt zu kommen,
wobei das zweite Gleitprofil (SP2) des Schieberiegels (LP) dazu ausgelegt ist, sich in Richtung der zweiten Klammer (C2) zu bewegen, wodurch eine zweite Translationsbewegung (T2) der zweiten Klammer (C2) entlang der zweiten Klammerführung (CG2) in Richtung der ersten Klammer (C1) induziert wird, wodurch es dem Befestigungssystem (FS) ermöglicht wird, die in dem Aufnahmebereich (RA) zwischen der ersten Klammer (C1) und der zweiten Klammer (C2) befindliche Trägerstruktur (S2) zu klemmen.

13. Befestigungssystem (FS) nach Anspruch 12, bei dem die Form des Schieberiegels (LP) eine U-Form ist, wobei die Form an den Aufnahmebereich (RA) angrenzt, wobei ein erstes Ende des Schieberiegels (LP) das erste Gleitprofil (SP1) umfasst und ein zweites Ende des Schieberiegels (LP) das zweite Gleitprofil (SP2) umfasst.

14. Befestigungssystem (FS) nach einem der Ansprüche 12 bis 13, wobei das Befestigungssystem (FS) ferner umfasst:
- eine dritte Klammerführung (CG3), die sich in Längsrichtung entlang einer zweiten Achse parallel zu der ersten Achse (Y) erstreckt,
- eine vierte Klammerführung (CG4), die sich in Längsrichtung entlang der zweiten Achse erstreckt,
- eine dritte Klammer (C3), die gleitend auf der dritten Klammerführung montiert ist,
- eine vierte Klammer (C4), die gleitend auf der vierten Klammerführung montiert ist,
- wobei der Schieberiegel (LP) ferner ein drittes Gleitprofil (SP3) und ein viertes Gleitprofil (SP4) umfasst, wobei das erste Gleitprofil (SP1) dazu ausgelegt ist, in Kontakt mit der dritten Klammer (C3) zu kommen, und das vierte Gleitprofil (SP4) dazu ausgelegt ist, um in Kontakt mit der vierten Klammer (C4) zu kommen,
wobei das dritte Gleitprofil (SP3) des Schieberiegels (LP) dazu ausgelegt ist, sich in Richtung der dritten Klammer (C3) zu bewegen und eine dritte Translationsbewegung der dritten Klammer (C3) entlang der dritten Klammerführung (CG3) in Richtung der vierten Klammer (C4) zu erzeugen, und wobei das vierte Gleitprofil (SP4) dazu ausgelegt ist, sich in Richtung der vierten Klammer (C4) zu bewegen, wodurch eine vierte Translationsbewegung der vierten Klammer (C4) in Richtung der dritten Klammer (C3) erzeugt wird, wodurch es dem Befestigungssystem (FS) ermöglicht wird, die im Aufnahmebereich (RA) zwischen der dritten Klammer (C3) und der vierten Klammer (C4) befindliche Trägerstruktur (S2) weiter zu klemmen.

## Revendications

1. Système de fixation (FS) adapté pour maintenir une première structure (S1) sur une structure de support (S2), ledit système de fixation (FS) comprenant :
- un premier guide de dispositif de serrage (CG1) s'étendant longitudinalement le long d'un premier axe (Y),
- un premier dispositif de serrage (C1) monté, de manière coulissante, sur le premier guide de dispositif de serrage (CG1),
- un support de dispositif de serrage (CS) attenant à une zone de réception (RA) adaptée pour recevoir la structure de support (S2), ladite zone de réception (RA) étant comprise entre une partie du support de dispositif de serrage (CS) et le premier dispositif de serrage (C1),
- un dispositif de poussée de médaillon (LP) comprenant un premier profilé de coulissement (SP1) adapté pour venir en contact avec une partie du premier dispositif de serrage (C1),
ledit premier profilé de coulissement (SP1) du dispositif de poussée de médaillon (LP) étant configuré pour se déplacer vers le premier dispositif de serrage (C1), induisant ainsi un premier mouvement de translation (T1) du premier dispositif de serrage (C1) le long du premier guide de dispositif de serrage (CG1), ledit premier mouvement de translation (T1) étant configuré pour réduire la taille de la zone de réception (RA), permettant par conséquent au système de fixation (FS) de serrer la structure de support (S2) positionnée dans la zone de réception (RA) contre le support de dispositif de serrage (CS),
dans lequel le premier dispositif de serrage (C1) comprend une forme de croissant pour établir au moins deux points de pression sur la structure de support (S2), **caractérisé en ce que** :
le premier profilé de coulissement (SP1) comprend une courbure intérieure adaptée pour convertir un mouvement (M1) dudit premier profilé de coulissement (SP1) vers le premier dispositif de serrage (C1) en un premier mouvement de translation (T1) du premier dispositif de serrage (C1) vers le support de dispositif de serrage (CS) avec une plus grande amplitude que l'amplitude provenant dudit mouvement du premier profilé de coulissement (SP1), le premier mouvement (M1) étant perpendiculaire au premier axe (Y) et le premier mouvement de translation (T1) étant parallèle au premier axe (Y).

2. Système de fixation (FS) selon la revendication 1, dans lequel le support de dispositif de serrage (CS) comprend le premier guide de dispositif de serrage (CG1).

3. Système de fixation (FS) selon l'une quelconque des revendications 1 à 2, dans lequel le support de dispositif de serrage (CS) comprend un premier guide de dispositif de poussée de médaillon (LG1), et le dispositif de poussée de médaillon (LP) comprenant en outre une première bride de dispositif de poussée de médaillon (LF1) guidée par le premier guide de dispositif de poussée de médaillon (LG1) pendant le mouvement du premier profilé de coulissement (SP1).

4. Système de fixation (FS) selon l'une quelconque des revendications 1 à 3, dans lequel le premier guide de dispositif de serrage (CG1) comprend un profilé transversal perpendiculaire à la direction du premier mouvement de translation (T1) du premier dispositif de serrage (C1), ledit profilé transversal étant formé pour maintenir le premier dispositif de serrage (C1), et dans lequel le premier dispositif de serrage (C1) comprend en outre une première bride de dispositif de serrage (CF1) adaptée pour coopérer avec le profilé transversal du premier guide de dispositif de serrage (CG1) pendant le mouvement du premier profilé de coulissement (SP1).

5. Système de fixation (FS) selon la revendication 4, dans lequel le profilé transversal du guide de dispositif de serrage (CG1) est un profilé en « H », ou un profilé en « T » ou un profilé en « X ».

6. Système de fixation (FS) selon l'une quelconque des revendications 1 à 5, dans lequel le dispositif de poussée de médaillon (LP) et le support de dispositif de serrage (CS) sont serrés avec une première vis (SW1).

7. Système de fixation (FS) selon les revendications 3 et 6, dans lequel la première vis (SW1) dans une position fixe, est configurée pour être insérée à travers la première bride de dispositif de poussée de médaillon (LF1).

8. Système de fixation (FS) selon l'une quelconque des revendications 1 à 7, dans lequel le premier dispositif de serrage (C1) comprend une première nervure (CR1), ladite première nervure (CR1) étant la partie du premier dispositif de serrage (C1) pour établir un premier contact de dispositif de serrage (CC1) avec le premier profilé de coulissement (SP1).

9. Système de fixation (FS) selon l'une quelconque des revendications 1 à 8, dans lequel le côté supérieur (S11) du premier dispositif de serrage (C1) est orienté dans une première direction (Z1), ou ledit côté supérieur (S11) du premier dispositif de serrage (C1) étant orienté dans une seconde direction (Z2) opposée à la première direction (Z1).

10. Système de fixation (FS) selon l'une quelconque des revendications 1 à 9, dans lequel le premier dispositif de serrage (C1) est adapté pour serrer le système de fixation (FS) sur la structure de support (S2) en appliquant au moins un point de pression sur ladite structure de support (S2).

11. Système de fixation (FS) selon l'une quelconque des revendications 1 à 10, dans lequel la structure de support (S2) est un tuyau avec des profilés à section circulaire ou ovoïde, ou est un support formé avec un profilé à section rectangulaire, ou est un support formé avec un profilé à section en « L » ou est un support formé avec un profilé à section en « T ».

12. Système de fixation (FS) selon l'une quelconque des revendications 1 à 11, comprenant en outre :
- un deuxième guide de dispositif de serrage (CG2) s'étendant longitudinalement le long du premier axe (Y),
- un deuxième dispositif de serrage (C2) monté, de manière coulissante, sur le deuxième guide de dispositif de serrage (CG2),
- le dispositif de poussée de médaillon (LP) comprenant en outre un deuxième profilé de coulissement (SP2) adapté pour venir en contact avec une partie du deuxième dispositif de serrage (C2),
ledit deuxième profilé de coulissement (SP2) du dispositif de poussée de médaillon (LP) étant adapté pour se déplacer vers le deuxième dispositif de serrage (C2), induisant ainsi un deuxième mouvement de translation (T2) dudit deuxième dispositif de serrage (C2) le long du deuxième guide de dispositif de serrage (CG2) vers le premier dispositif de serrage (C1), permettant ainsi au système de fixation (FS) de serrer la structure de support (S2) positionnée dans la zone de réception (RA) entre le premier dispositif de serrage (C1) et le deuxième dispositif de serrage (C2).

13. Système de fixation (FS) selon la revendication 12, dans lequel la forme du dispositif de poussée de médaillon (LP) est une forme de « U », ladite forme étant attenante à la zone de réception (RA), une première extrémité du dispositif de poussée de médaillon (LP) comprenant le premier profilé de coulissement (SP1), et une seconde extrémité du dispositif de poussée de médaillon (LP) comprenant le deuxième profilé de coulissement (SP2).

14. Système de fixation (FS) selon l'une quelconque des revendications 12 à 13, dans lequel le système de fixation (FS) comprend en outre :
- un troisième guide de dispositif de serrage (CG3) s'étendant longitudinalement le long d'un second axe parallèle au premier axe (Y),
- un quatrième guide de dispositif de serrage (CG4) s'étendant longitudinalement le long du second axe,
- un troisième dispositif de serrage (C3) monté, de manière coulissante, sur le troisième guide de dispositif de serrage,
- un quatrième dispositif de serrage (C4) monté, de manière coulissante, sur le quatrième guide de dispositif de serrage,
- le dispositif de poussée de médaillon (LP) comprenant en outre un troisième profilé de coulissement (SP3) et un quatrième profilé de coulissement (SP4), ledit premier profilé de coulissement (SP1) étant adapté pour venir en contact avec le troisième dispositif de serrage (C3), et ledit quatrième profilé de coulissement (SP4) étant adapté pour venir en contact avec le quatrième dispositif de serrage (C4),
ledit troisième profilé de coulissement (SP3) du dispositif de poussée de médaillon (LP) étant adapté pour se déplacer vers le troisième dispositif de serrage (C3), créant un troisième mouvement de translation dudit troisième dispositif de serrage (C3) le long du troisième guide de dispositif de serrage (CG3) vers le quatrième dispositif de serrage (C4), et ledit quatrième profilé de coulissement (SP4) étant adapté pour se déplacer vers le quatrième dispositif de serrage (C4), créant un quatrième mouvement de translation dudit quatrième dispositif de serrage (C4) vers le troisième dispositif de serrage (C3), permettant par conséquent au système de fixation (FS) de serrer davantage la structure de support (S2) positionnée dans la zone de réception (RA) entre le troisième dispositif de serrage (C3) et le quatrième dispositif de serrage (C4).
